# EUROPEAN PATENT APPLICATION

(11) **EP 4 734 033 A1**
(43) Date of publication of application: **29.04.2026**
(21) Application number: 25182174.0
(22) Date of filing: 11.06.2025
(51) Int. Cl.: G06Q 40/04, G06Q 20/10

(54) **RESOURCE EXCHANGE METHOD AND APPARATUS, COMPUTER DEVICE, STORAGE MEDIUM, AND PROGRAM PRODUCT**

(30) Priority: 28.10.2024 SG 10202403324P
(71) Applicant: Gate Information Pte. Ltd., Singapore (SG)
(72) Inventor: Liu, Robin, Singapore (SG); Zhang, Honlay, Singapore (SG); Wang, Tim, Singapore (SG)
(74) Representative: Wu, Ting

(57) **Abstract**

This application relates to a resource exchange method and apparatus, computer device, computer-readable storage medium and computer program product. The method includes: receiving an instant resource exchange request sent by an exchange requester; performing a resource exchange between the exchange requester and a first exchange responder corresponding to a first expected value limit of a current exchange response attribute corresponding to the instant resource exchange request; generating a first resource request condition based on the first expected value limit when it is detected that a remaining required resource amount of the instant resource exchange request is greater than a preset resource amount threshold; and upon detecting that the second resource request condition matching the first resource request condition, performing a resource exchange between the exchange requester and a second exchange responder corresponding to the second resource request condition based on the second resource request condition.

## Description

### TECHNICAL FIELD

This application relates to the field of data processing technology, specifically to a resource exchange method and apparatus, computer device, computer-readable storage medium, and computer program product.

### BACKGROUND

With the rapid advancement of technology, there is an increasing reliance on digital lifestyles. Resource exchange over the network has adapted to this trend, providing a novel means of value storage and transfer that aligns with the digital age.

In traditional technology, when users urgently need a certain resource, they prefer to perform an instant resource exchange and are willing to relax their expectations regarding data resource consumption during the exchange. To address this situation, digital platforms provide an instant resource exchange function, which enables rapid facilitation of resource exchange within a short period.

However, when users wish to exchange a large amount of resources instantly and the market is highly volatile, the actual data resource consumption for the resource exchange may easily deviate from their expectations. This can lead to decreased satisfaction with the instant resource exchange function, reduced frequency of its use, and lower utilization rates of resources allocated for this function by the digital platform.

### SUMMARY

Based on this, it is necessary to address the above-mentioned technical issues by providing a resource exchange method and apparatus, computer device, computer-readable storage medium, and computer program product that can improve the resource utilization of the digital platform.

In the first aspect, this application provides a resource exchange method, which includes:
receiving an instant resource exchange request from an exchange requester;
in responding to the instant resource exchange request, performing, based on a first expected value limit of a current exchange response attribute corresponding to the instant resource exchange request, a resource exchange between the exchange requester and a first exchange responder corresponding to the first expected value limit;
a condition determination step of generating, upon detecting that a remaining required resource amount of the instant resource exchange request exceeds a preset resource amount threshold, a first resource request condition based on the remaining required resource amount and the first expected value limit; and
upon detecting a second resource request condition that matches the first resource request condition, performing a resource exchange between the exchange requester and a second exchange responder corresponding to the second resource request condition based on the second request condition.

In an embodiment, after generating the first resource request condition based on the remaining required resource amount and the first expected value limit, the method further includes:
if no second resource request condition that matches the first resource request condition is detected within a preset time range, obtaining a second expected value limit of the current exchange response attribute corresponding to the resource instant exchange request; and
updating the first resource request condition based on a preset optimization coefficient and the second expected value limit.

In an embodiment, after generating the first resource request condition based on the remaining required resource amount and the first expected value limit, the method further includes:
detecting a third expected value limit of the current exchange request corresponding to the instant resource exchange request; and
in a case where the third expected value limit is different from the first expected value limit, updating the first resource request condition based on the third expected value limit.

In an embodiment, after performing the resource exchange between the exchange requester and the second exchange responder corresponding to the second resource request condition based on the second resource request condition, the method further includes:
re-determining the remaining required resource amount of the instant resource exchange request based on an exchange amount information of the resource exchange between the exchange requester and the second exchange responder, and proceeding to the condition determination step.

In an embodiment, before generating, upon detecting that the remaining required resource amount of the instant resource exchange request exceeds the preset resource amount threshold, the first resource request condition based on the remaining required resource amount and the first expected value limit, the method further includes:
obtaining an exchange type of the instant resource exchange request;
proceeding to the condition determination step if it is determined that the exchange type of the instant resource exchange request is a dynamic adjustment type;
detecting whether the remaining required resource amount of the instant resource exchange request exceeds the preset resource amount threshold if it is determined that the exchange type of the instant resource exchange request is the instant execution type;
re-determining a new first expected value limit of the current exchange response attribute corresponding to the instant resource exchange request when detecting that the remaining required resource amount of the instant resource exchange request exceeds the preset resource amount threshold; and
based on the new first expected value limit of the current exchange response attribute corresponding to the instant resource exchange request, performing a resource exchange between the exchange requester and a new first exchange responder corresponding to the new first expected value limit, and returning to the step of detecting whether the remaining required resource amount of the instant resource exchange request exceeds the preset resource amount threshold until the remaining required resource is less than or equal to the preset resource amount threshold.

In an embodiment, after performing the resource exchange between the exchange requester and the second exchange responder corresponding to the second resource request condition based on the second resource request condition, the method further includes:
determining an actual resource consumption and an estimated resource consumption in cases where the exchange type of the instant resource exchange request is the instant execution type; and
displaying the actual resource consumption and the estimated resource consumption.

In the second aspect, this application also provides a resource exchange apparatus, which includes:
a receiving module configured to receive an instant resource exchange request from an exchange requester;
a first exchange module configured to perform, based on a first expected value limit of a current exchange response attribute corresponding to the instant resource exchange request, resource exchange between the exchange requester and a first exchange responder corresponding to the first expected value limit;
a condition determination module configured to perform a condition determination step of generating, upon detecting that a remaining required resource amount of the instant resource exchange request exceeds a preset resource amount threshold, a first resource request condition based on the remaining required resource amount and the first expected value limit; and
a second exchange module configured to perform, upon detecting that a second resource request condition that matches the first resource request condition, resource exchange between the exchange requester and a second exchange responder corresponding to the second resource request condition based on the second resource request condition.

In the third aspect, this application also provides a computer device, which includes a memory and a processor. The memory stores a computer program, and the processor executes the computer program to implement the following steps:
receiving an instant resource exchange request from an exchange requester;
in responding to the instant resource exchange request, performing, based on a first expected value limit of a current exchange response attribute corresponding to the instant resource exchange request, resource exchange between the exchange requester and a first exchange responder corresponding to the first expected value limit;
performing a condition determination step of generating, upon detecting that a remaining required resource amount of the instant resource exchange request exceeds a preset resource amount threshold, a first resource request condition based on the remaining required resource amount and the first expected value limit; and
upon detecting a second resource request condition matching the first resource request condition, performing a resource exchange between the exchange requester and a second exchange responder corresponding to the second resource request condition.

In the fourth aspect, this application also provides a computer-readable storage medium on which a computer program is stored. The computer program, when executed by a processor, causes the processor to perform the following steps:
receiving an instant resource exchange request from an exchange requester;
in responding to the instant resource exchange request, performing, based on a first expected value limit of a current exchange response attribute corresponding to the instant resource exchange request, resource exchange between the exchange requester and a first exchange responder corresponding to the first expected value limit
performing a condition determination step of generating, upon detecting that a remaining required resource amount of the instant resource exchange request exceeds a preset resource amount threshold, a first resource request condition based on the remaining required resource amount and the first expected value limit; and
upon detecting the second resource request condition matching the first resource request condition, performing a resource exchange between the exchange requester and a second exchange responder corresponding to the second resource request condition.

In the fifth aspect, this application also provides a computer program product, which includes a computer program. When executed by a processor, the computer program causes the processor to implement the following steps:
receiving an instant resource exchange request from an exchange requester;
in responding to the instant resource exchange request, performing, based on a first expected value limit of a current exchange response attribute corresponding to the instant resource exchange request, resource exchange between the exchange requester and a first exchange responder corresponding to the first expected value limit;
performing a condition determination step of generating, upon detecting that a remaining required resource amount of the instant resource exchange request exceeds a preset resource amount threshold, a first resource request condition based on the remaining required resource amount and the first expected value limit; and
upon detecting a second resource request condition matching the first resource request condition, performing a resource exchange between the exchange requester and a second exchange responder corresponding to the second resource request condition based on the second resource request condition.

According to the resource exchange method and apparatus, computer device, computer-readable storage medium, and computer program product described above, an instant resource exchange request from an exchange requester is received first. Then, a resource exchange is performed between the exchange requester and a first exchange responder corresponding to a first expected value limit of a current exchange response attribute corresponding to the instant resource exchange request, which enables at least partial instant fulfillment of the resource needs of the exchange requester, and the actual resource consumption from the data exchange performed according to the first expected value limit can meet or even be lower than estimated. Subsequently, upon detecting that the remaining required resource amount of the instant exchange request exceeds a preset resource amount threshold, a first resource request condition is generated based on the remaining required resource amount and the first expected value limit; and upon detecting that a second resource request condition matches the first resource request condition, a resource exchange is performed between the exchange requester and a second exchange responder corresponding to the second resource request condition, which provides a waiting and buffering phase for the portion of the resource demand where the actual resource consumption from the exchange may be higher than estimated. During this phase, if a new second exchange responder is willing to perform the resource exchange under conditions where the actual resource consumption is comparable to or even lower than estimated, it effectively reduces the actual resource consumption for this portion of the demand. As a result, it enhances the exchange requester's satisfaction with the instant resource exchange function, increases the frequency of usage, reduces resource waste in the instant resource exchange function, and ultimately improves the digital platform's resource utilization.

### BRIEF DESCRIPTION OF THE DRAWINGS

To more clearly illustrate the technical solutions in the embodiments of this application or related technology, a brief introduction to the accompanying figures used in the descriptions of the embodiments or related technology is provided below. It is evident that the accompanying figures are merely some embodiments of this application. For those skilled in the art, other related figures may also be obtained without creative effort based on these figures.
Figure 1 is a schematic flow diagram of a resource exchange method according to an embodiment.
Figure 2 is a schematic flow diagram illustrating the step of updating the first resource request condition as shown in figure 1 according to another embodiment.
Figure 3 is a schematic flow diagram illustrating the step of updating the first resource request condition according to another embodiment.
Figure 4 is a structural block diagram of a resource exchange apparatus according to an embodiment.
Figure 5 is an internal structural diagram of a computer device according to an embodiment.

### DETAILED DESCRIPTION

To clarify the purpose, technical solutions, and advantages of this application, a detailed elaboration is presented below with the figures and embodiments. It is worth noting that the embodiments described below are only for the purpose of clarifying this application and are not intended to limit the present application.

The terminologies used herein are for the purpose of describing specific embodiments only and are not intended to limit the application. As used herein, the singular forms "a", "an", and "the" may also include the plural forms, unless otherwise clearly indicated. It should also be understood that the terms "comprise" and "include" used herein specify the presence of stated features, steps, operations, elements, and/or components, but do not preclude the presence or addition of one or more other features, steps, operations, elements, components, and/or combinations thereof. It will be understood that the terms "first", "second", etc. used in this disclosure may be used herein to describe various elements, but these elements are not limited by these terms. These terms are only used to distinguish a first element from another element.

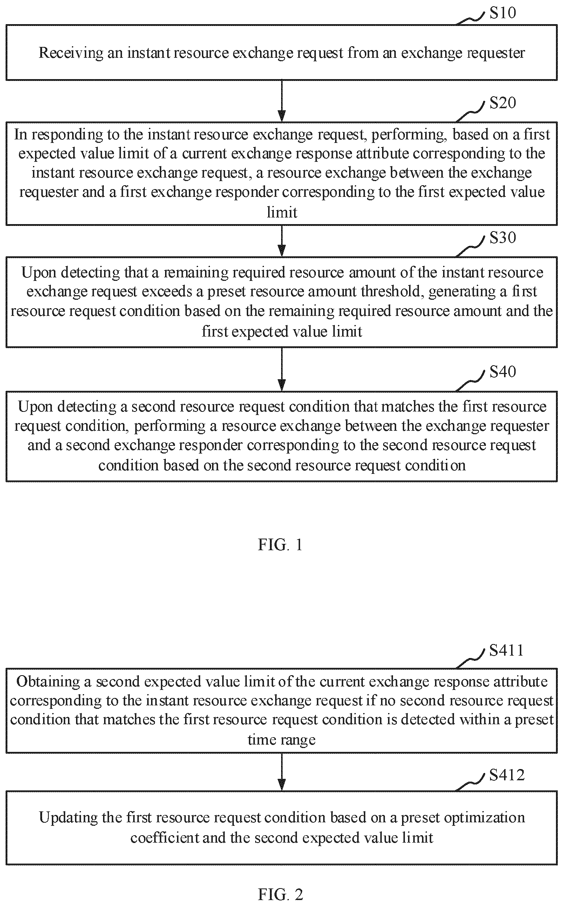

In an exemplary embodiment, as shown in Figure 1, a resource exchange method is provided. The method will be illustrated by taking the application of the method to a terminal as an example. The terminal may include but is not limited to personal computers, laptops, smartphones, Internet of Things (IoT) devices, and portable wearable devices. The IoT devices include smart speakers, smart TVs, smart air conditioners, smart in-car equipment, projectors, etc. The portable wearable devices include smart watches, smart bands, headsets, etc. The headsets include Virtual Reality (VR) devices, Augmented Reality (AR) devices, smart glasses, etc. Besides, this method can also be applied to a server. The method can also be applied to a system including servers and terminals, and the method can be realized via the interaction between the terminals and the servers.

In an embodiment, the method includes the following steps S 10-S40.

In step S 10, an instant resource exchange request sent by an exchange requester is received.

It is worth noting that the resource exchange refers to the exchange of resources owned between two parties. These resources include data resources, virtual resources, and financial resources, in which the virtual resources refer to digitized products such as cryptocurrencies, digital collectibles, non-fungible tokens, etc. As an example, the resource exchange may refer to the transaction of data resources among multiple departments in a company or multiple subsidiaries of a company. Besides, the resource exchange may also refer to the exchange of virtual resources and financial resources, i.e., the exchange of financial resources and virtual resources between two parties.

The resource exchange method in this embodiment is applied in a digital platform for resource exchange (referred to as the digital platform hereinafter), such as virtual resources and financial resources, and on which users can buy, sell, exchange, and store all kinds of virtual resources. When users need to exchange resources, they can send exchange requests to the digital platforms via their equipment. The party sending the exchange request is the exchange requester, while the party responding to and completing the exchange with the exchange requester is the exchange responder. In this embodiment, the digital platform may run on the terminal as described above. The terminal can communicate with other devices via a communication interface. For example, the terminal receives the instant resource exchange request from a first device of the exchange requester, and receives response operations from a second device of the exchange responder.

An instant resource exchange request is configured to initiate a resource exchange immediately or within a short period on the digital platform. Given that instant resource exchange requests do not carry resource exchange conditions, the digital platform will usually conduct the exchange using the optimal resource exchange conditions available on the digital platform. When users urgently need a certain resource, they would wish to exchange resources immediately, for which purpose they can lower their expectations regarding the data resource consumption involved in the exchange. The digital platform provides an instant resource exchange function for such situations, allowing for a quick completion of the resource exchange within a short time. Data resource consumption includes one of financial resource consumption, time resource consumption, computational resource consumption, human resource consumption, communication resource consumption, etc., or any combination thereof. For example, when users urgently need virtual resources, they may be willing to use more communication resources, human resources, and financial resources to compete for those virtual resources. Similarly, when users urgently need financial resources, they may be willing to quickly sell their virtual resources at lower prices.

However, when the amount of the resource that users want to exchange instantly is large and the overall market is highly volatile, the market conditions observed by users during the data resource consumption assessment may significantly differ from the market conditions at the time of submitting the request. This can lead to a great deviation of the actual data resource consumption from users' expectation. Furthermore, if the market is highly volatile, it is possible that there will be exchangeable resources that can generate lower resource consumption available in the market shortly after completing the resource exchange. Over time, this could lead to a decrease in user satisfaction with the instant resource exchange function, causing users to use it less frequently or even stop using it. Consequently, the usage frequency of the instant resource exchange function would decrease, and the utilization rate of the resources allocated by the digital platform for the instant resource exchange function would also decrease.

Exemplarily, any user who needs to conduct a resource exchange immediately or within a short time period can act as an exchange requester and send an instant resource exchange request to the digital platform through a first terminal device. The digital platform can receive the instant resource exchange request sent by the exchange requester through the first terminal device.

In step S20, in responding to the instant resource exchange request, based on a first expected value limit of a current exchange response attribute corresponding to the instant resource exchange request, a resource exchange is performed between the exchange requester and a first exchange responder corresponding to the first expected value limit.

The expected value of the exchange attributes represents the resource exchange standards expected by the user, including an expected value of exchange response attributes and an expected value of exchange request attributes. The expected value of the exchange response attributes refers to the resource exchange standards expected by the exchange responder, while the expected value of the exchange request attributes refers to the resource exchange standards expected by the exchange requester. As an example, the expected value of the exchange attributes may be the resource exchange price specified by the user. If the exchange requester is a buyer, the expected value of the exchange request attributes is the purchase price, the exchange responder is a seller, and the expected value of the exchange response attributes is the selling price. Conversely, if the exchange requester is a seller, the expected value of the exchange request attributes is the selling price, the exchange responder is a buyer, and the expected value of the exchange response attributes is the purchase price. The expected value limit of the exchange response attributes refers to the expected value of the exchange attributes disclosed on the digital platform that can result in the lowest data resource consumption for the exchange requester, which is usually the maximum or minimum value of the disclosed expected values of the exchange attributes. As an example, if the exchange requester is a buyer, the expected value limit of the exchange response attributes could be the lowest disclosed selling price; if the exchange requester is a seller, the expected value limit of the exchange response attributes could be the highest disclosed purchase price.

Exemplarily, after the digital platform receives an instant resource exchange request sent by the exchange requester, it first determines the target exchange type corresponding to the instant resource exchange request. Then, it identifies the expected value limit of the exchange response attributes from the disclosed expected values of the exchange response attributes corresponding to the target exchange type, thus obtaining the first expected value limit of the current exchange response attribute, and determines at least one first exchange responder corresponding to the first expected value limit. Subsequently, it performs the resource exchange between the exchange requester and the at least one first exchange responder based on the first expected value limit and the exchangeable resource amount corresponding to the at least one first exchange responder. For instance, if the target exchange type corresponding to the exchange requester P1 is selling, the first expected value limit could be the highest disclosed purchase price *cmax* on the digital platform. Assuming the first exchange responder P2 corresponding to *cmax* has an open order to purchase an amount of n1 of the target resource at the price of *cmax,* the digital platform will transfer an amount of n1 of the target resource from P1 to P2 and transfer *cmax* of financial resources from P2 to P1, thereby completing the resource exchange between P1 and P2.

It can be understood that there may be multiple first exchange responders, meaning that multiple users have disclosed the same expected value of the exchange attributes. In this case, the resource exchange can be conducted between the exchange requester and some or all of the first exchange responders based on the actual resource amount required by the exchange requester and the exchangeable resource amount of the respective first exchange responders.

In step S30 of a condition determination step, upon detecting that a remaining required resource amount of the instant resource exchange request exceeds a preset resource amount threshold, a first resource request condition is generated based on the remaining required resource amount and the first expected value limit.

It should be noted that if the resource demand from the exchange requester is large and exceeds the resource amount available for exchange from the first exchange responder, the exchange requester's resource demand may not be fully satisfied after the exchange with the first exchange responder. In such cases, traditional techniques usually query other publicly available resources on the digital platform for resource exchange to find a new first expected value limit and the corresponding first exchange responder to continue the resource exchange until the exchange requester's resource demand is fully met. For instance, a first user has posted an order to sell resources at a price of 1 per unit with an exchangeable resource amount of 1, a second user has posted an order to sell resources at a price of 5 per unit with an exchangeable resource amount of 5, and a third user has posted an order to sell resources at a price of 10 per unit with an exchangeable resource amount of 20. If the exchange requester sends an instant resource exchange request to purchase 10 units of resources, according to traditional techniques, the exchange requester would first buy 1 unit from the first user at a price of 1, then buy 5 units from the second user at a price of 5, and finally buy 4 units from the third user at a price of 10. During this process, if there is significant market fluctuation and any of these orders are withdrawn or changed, for example, if the third user withdraws the order and the next higher price level is 50, the actual data resource consumption could be much higher than the expected consumption evaluated at a price of 10. Furthermore, if the third user withdraws the order to resubmit it at a price of 5 with an exchangeable resource amount of 10, the exchange requester might immediately see this new order after completing the previous exchanges and become dissatisfied with the earlier transactions.

Exemplarily, in the present application, after the exchange between the exchange requester and the first exchange responder, the actual resource exchange amount is obtained, which is usually the available resource amount disclosed by the first exchange responder. Then, the resource demand information is extracted from the instant resource exchange request to determine the exchange requester's demand amount. By subtracting the actual exchanged amount from the demand amount, the remaining required resource amount is determined. If the remaining required resource amount exceeds a preset resource amount threshold, for example, greater than 0, it indicates that the exchange requester's demand has not been fully satisfied, and further exchanges are needed. Therefore, based on the remaining required resource amount and the first expected value limit, a first resource request condition is generated to set exchange conditions for the instant resource exchange request in stages. In this stage, only exchange responders with exchange attributes matching the first resource request condition can perform the exchange with the exchange requester.

In this scenario, unlike traditional techniques, the embodiments of the present application provide a waiting and buffering stage for the exchange requester to mitigate risks from market fluctuations and capture opportunities to reduce resource consumption.

As an example, to ensure the instant resource exchange request's quick response requirement is met, a time range can be set for this stage. After the first resource request condition is generated, timing begins, and if the preset time range is exceeded, a latest current first expected value limit is re-determined to continue the exchange based on the latest current first expected value limit.

As an example, to enhance the flexibility of the instant resource exchange function, both the dynamic adjustment type of the instant resource exchange request method provided by the embodiments of the present application and the traditional instant execution type of exchange request method can be retained, so that users can make choices based on the current market conditions and their actual needs for risk assessment. For instance, in cases of significant market price fluctuations and large demand amounts, if it is assessed that the dynamic adjustment type of the instant resource exchange request method has lower risk, this method may be selected. In cases of stable market conditions, low demand amount, or high response speed requirements, or if the instant execution type of exchange request method's risk is deemed acceptable, the traditional method may be selected.

As an example, after the first resource request condition is generated, the first resource request condition can also be displayed to other users.

In Step S40, upon detecting a second resource request condition matching the first resource request condition, proceed with the resource exchange between the exchange requester and a second exchange responder corresponding to the second resource request condition based on the second resource request condition.

Exemplarily, after the first resource request condition is generated, if a second exchange responder proposes a second resource request condition matching the first resource request condition, the resource exchange can proceed between the exchange requester and the second exchange responder based on the second resource request condition, e.g., proceed the exchange at the price specified in the second resource request condition. For example, if the first resource request condition is to purchase resources at a price lower than c1, and the second resource request condition is to sell resources at a price of c2, where c2 is less than c1, it indicates that the second resource request condition matches the first resource request condition, and the exchange can proceed at the price of c2.

In the aforementioned resource exchange method, firstly, the instant resource exchange request from the exchange requester is received. By performing the resource exchange between the exchange requester and the first exchange responder corresponding to the first expected value limit of the current exchange response attribute, at least part of the exchange requester's resource demand is immediately satisfied. The actual data resource consumption of the exchange performed at the first expected value limit can be comparable to or even lower than expected. Further, upon detecting that the remaining required resource amount of the instant resource exchange request exceeds a preset resource amount threshold, a first resource request condition is generated based on the remaining required resource amount and the first expected value limit. When a second resource request condition matching the first resource request condition is detected, resource exchange is performed between the exchange requester and the second exchange responder corresponding to the second resource request condition. This approach establishes a waiting and buffering stage for the portion of resource demand where the actual data resource consumption after the exchange might exceed the expected consumption. During this stage, if a new second exchange responder is willing to exchange at conditions comparable to or lower than the expected consumption, the actual data resource consumption for this part of the demand can be effectively reduced. This improves the exchange requester's satisfaction with the instant resource exchange function, increases the usage frequency of the instant resource exchange function, reduces resource wastage, and enhances the resource utilization rate of the digital platform.

In an exemplary embodiment, as shown in Figure 2, after generating the first resource request condition based on the remaining required resource amount and the first expected value limit, the method further includes the following steps S411 to S412.

In step S411, if no second resource request condition matching the first resource request condition is detected within a preset time range, a second expected value limit of the current exchange response attribute corresponding to the instant resource exchange request is obtained.

It should be noted that users proposing an instant resource exchange request usually hope to perform the resource exchange immediately or within a short period. If no second resource request condition matching the first resource request condition is detected for a long time, the quick response requirement of the user cannot be met, leading to reduced satisfaction with the instant resource exchange function, decreased usage frequency, and lower resource utilization rate of the digital platform.

Exemplarily, after the first resource request condition is generated, it will wait for a matching second resource request condition for the preset time range. If a matching second resource request condition is detected before the end of the preset time range, the step of proceeding with the resource exchange between the exchange requester and the second exchange responder corresponding to the second resource request condition will be executed. If no matching second resource request condition is detected within the preset time range, an expected value limit of the current exchange response attribute is determined from the disclosed expected values of the exchange response attributes corresponding to the target exchange type to obtain the second expected value limit.

In step S412, the first resource request condition is updated based on a preset optimization coefficient and the second expected value limit.

Exemplarily, after determining the second expected value limit, the optimized expected value is calculated based on the preset optimization coefficient and the second expected value limit. The data resource consumption corresponding to the optimized expected value is greater than the data resource consumption corresponding to the second expected value limit. For example, if the instant resource exchange request is to sell the resource, and the second expected value limit is the purchase price c1, then the optimized expected value should be less than c1; if the instant resource exchange request is to buy the resource, and the second expected value limit is the sell price c2, then the optimized expected value should be greater than c2. Then, replace the first expected value limit with the optimized expected value to update the first resource request condition, ensuring that the exchange requester can instantly exchange the resource.

As an example, in the case that the first resource request condition is disclosed or displayed through the digital platform, the first resource request condition that was previously disclosed or displayed can be withdrawn and the updated first resource request condition can be disclosed or displayed.

As an example, methods of calculating the optimized expected value based on the preset optimization coefficient and the second expected value limit include: determining the product of the second expected value limit and the preset optimization coefficient as the optimized expected value; or determining the sum of the second expected value limit and the preset optimization coefficient as the optimized expected value. The specific method for calculating the optimized expected value may be determined according to the actual situation, which is not limited by this embodiment.

In the embodiment, by setting the preset time range and gradually optimizing the first resource request condition, the data resource consumption can be controlled while ensuring the fast response to the instant resource exchange request. In this way, the demand for quick response to the instant resource exchange request can be met, so as to increase the use frequency of the instant resource exchange function, reduce the resource waste of the instant resource exchange function, and improve resource utilization on the digital platform.

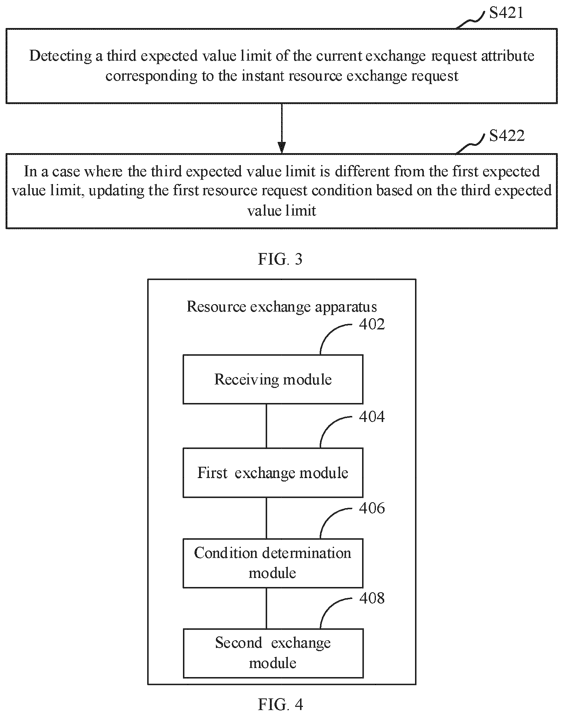

In an exemplary embodiment, as shown in Figure 3, after the first resource request condition is generated based on the remaining required resource amount and the first expected value limit, the method further includes the following steps S421 to S422.

In step S421, a third expected value limit of the current exchange request attribute corresponding to the instant resource exchange request is detected.

It should be noted that the resource exchange with the first exchange responder is based on the expected value limit of the current exchange response attribute, i.e., the current third expected value limit. In the case of significant market fluctuations, the third expected value limit will continue to change. If the first resource request condition remains unchanged, it may lose competitiveness, making it difficult to meet the resource demand of the instant resource exchange request in a timely manner.

Exemplarily, after the first resource request condition is generated, it is also possible to continuously monitor whether the third expected value limit disclosed on the digital platform changes, i.e., whether the current third expected value limit is the same as the first expected value limit.

In step S422, if the third expected value limit is different from the first expected value limit, the first resource request condition is updated based on the third expected value limit.

Exemplarily, if the third expected value limit is detected to be different from the first expected value limit, the first expected value limit is replaced by the third expected value limit to update the first resource request condition. If the third expected value limit is detected to be the same as the first expected value limit, there is no need to update the first resource request condition, and the third expected value limit disclosed on the digital platform is continuously monitored for changes.

As an example, if the first resource request condition is disclosed or displayed through the digital platform, the first resource request condition that was previously disclosed or displayed can be withdrawn and the updated first resource request condition can be disclosed or displayed.

In this embodiment, by monitoring the third expected value limit and dynamically adjusting the first resource request condition along with the third expected value limit, the instant resource exchange request can be well adapted to market fluctuations to always maintain a better competitiveness, improve the resource exchange achievement rate, and ensure the fast response to the instant resource exchange request while controlling the data resource consumption. In this way, the demand for quick response to the instant resource exchange request can be met, so as to increase the use frequency of the instant resource exchange function, reduce the resource waste of the instant resource exchange function, and improve resource utilization on the digital platform.

In an exemplary embodiment, after performing resource exchange between the exchange requester and the second exchange responder corresponding to the second resource request condition based on the second resource request, the method further includes:
updating the remaining required resource amount of the instant exchange request based on the exchange amount information of the resource exchange between the exchange requester and the second exchange responder, and proceeding to step S30.

Exemplarily, after the resource exchange between the exchange requester and the second exchange responder, the exchange amount information of the resource exchange between the exchange requester and the second exchange responder can be obtained first to determine the actual exchange amount of the resource exchange between the exchange requester and the second exchange responder. Then subtract the actual exchange amount of the resource exchange between the exchange requester and the second exchange responder from the remaining required resource amount to re-determine a new remaining required resource amount. If the new remaining required resource amount is greater than the preset resource amount threshold, for example, greater than 0, it indicates that the resource exchange requirements of the exchange requester have not been fully met, and further resource exchange is required. Therefore, proceed to the condition determination step until the remaining required resource is less than or equal to the preset resource amount threshold.

In this embodiment, when the amount of resources that the user wants to exchange instantly is large and the overall market is highly volatile, the actual data resource consumption for the instant resource exchange request is effectively controlled through the continuous cycle of resource exchange steps and waiting steps, which can better resist the risks brought by market fluctuations and capture opportunities to reduce the data resource consumption from market volatility.

In an exemplary embodiment, before generating the first resource request condition based on the remaining required resource amount and the first expected value limit upon detecting that the remaining required resource amount is greater than the preset resource amount threshold, the method also includes the following steps S21 to S25.

In step S21, an exchange type of the instant resource exchange request is obtained.

The exchange type refers to the type of instant resource exchange, including the dynamic adjustment type and the instant execution type, which can be applied to different scenarios. The dynamic adjustment type allows delayed resource exchange within a certain time range by setting a waiting phase when the expected value limit of the current exchange response attribute is insufficient to meet the resource requirements of the instant resource exchange request. The instant execution type refers to the type of resource exchange based on the expected value limit of other exchange response attribute when the exchangeable resource amount corresponding to the expected value limit of the current exchange response attribute is insufficient to meet the resource requirements of the instant resource exchange request. The exchange type of an instant resource exchange request can be selected by the user when submitting the instant resource exchange request.

Exemplarily, in response to the exchange type selection for the instant resource exchange request, the exchange type of the instant resource exchange request is obtained.

In step S22, if the exchange type of the instant resource exchange request is determined to be the dynamic adjustment type, it proceeds to the condition determination step S30.

Exemplarily, if the exchange type of the instant resource exchange request is determined to be the dynamic adjustment type, it is determined whether the remaining required resource amount of the instant resource exchange request is greater than the preset resource amount threshold. If the remaining required resource amount of the instant resource exchange request is not greater than the preset resource amount threshold, it indicates that the resource requirements of the instant resource exchange request have been fully met, and the resource exchange request has been completed. If the remaining required resource amount exceeds the preset resource amount threshold, it proceeds to the condition determination step.

In step S23, if the exchange type of the instant resource exchange request is determined to be the instant execution type, it is determined whether the remaining required resource amount of the instant resource exchange request is greater than the preset resource amount threshold.

Exemplarily, if the exchange type of the instant resource exchange request is determined to be the instant execution type, it is determined whether the remaining required resource amount of the instant resource exchange request is greater than the preset resource amount threshold.

In step S24, upon determining that the remaining required resource amount of the instant resource exchange request exceeds the preset resource amount threshold, a new first expected value limit of the current exchange response attribute corresponding to the instant resource exchange request is re-determined.

Exemplarity, if the remaining required resource amount of the instant resource exchange request is not greater than the preset resource amount threshold, it indicates that the resource requirements of the instant resource exchange request have been fully met, and the resource exchange request has been completed. If the remaining required resource amount exceeds the preset resource amount threshold, the current expected value limit of the exchange response attribute is re-determined from the expected values of the disclosed exchange response attributes corresponding to the target exchange type. A new first expected value limit is generated and at least one new first exchange responder corresponding to the new first expected value limit is determined.

In step S25, based on the new first expected value limit of the current exchange response attribute corresponding to the instant resource exchange request, resource exchange is performed between the exchange requester and a new first exchange responder corresponding to the new first expected value limit. Afterward, it returns to the step of detecting whether the remaining required resource amount of the instant resource exchange request exceeds the preset resource amount threshold.

Exemplarily, based on the new first expected value limit and the exchangeable resource amount corresponding to the new first exchange responder, a resource exchange is performed between the exchange requester and the new first exchange responder. Then, the remaining required resource amount is re-checked to determine whether it exceeds the preset resource amount threshold. This process repeats until the remaining required resource amount is less than or equal to the preset resource amount threshold.

In this embodiment, by retaining both the dynamic adjustment type provided by this embodiment and the traditional instant execution type of instant resource exchange request method, multiple options are available for users. Users can perform risk assessments and make choices based on the actual market status and their specific needs, making the instant resource exchange function more flexible and comprehensive. This approach better meets the exchange requester's expectations regarding resource consumption, increases the frequency of use of the instant resource exchange function, reduces resource waste, and improves the resource utilization rate of the digital platform.

In an exemplary embodiment, after performing the resource exchange between the exchange requester and the second exchange responder corresponding to the second resource request condition based on the second resource request condition, the method also includes the following steps S50 to S60.

In step S50, an actual resource consumption, as well as an estimated resource consumption in cases where the exchange type of the instant resource exchange request is the instant execution type, are determined.

Exemplarily, after the completion of a dynamic adjustment type of instant resource exchange request, the actual resource consumption can be calculated based on the actual resource exchange. Meanwhile, since the instant execution type of instant resource exchange request is performed based on the expected value of the disclosed exchange response attributes on the digital platform at the time the request is made, its resource consumption can be estimated. Therefore, the estimated resource consumption can be predicted when the instant resource exchange request belongs to the instant execution type.

In step S60, the actual resource consumption and the estimated resource consumption are displayed.

Exemplarily, after determining the actual resource consumption and the estimated resource consumption, the digital platform can display both to the exchange requester. This allows the user to intuitively understand the advantages of both methods.

In this embodiment, by displaying the resource consumption information for the two types of exchanges, users are provided with more analytical data. This enables them to choose the type of exchange that better meets their needs based on different market conditions and their actual requirements. As a result, user satisfaction with the instant resource exchange function is improved, the frequency of use of the instant resource exchange function is increased, resource waste in the instant resource exchange function is reduced, and the resource utilization of the digital platform is enhanced.

The following explanation clarifies that despite the steps in the flowcharts involved in the above embodiments are shown sequentially according to the direction of the arrows, these steps are not necessarily executed strictly in the order indicated by the arrows. Unless explicitly stated otherwise in this document, the execution of these steps is not strictly limited to a specific order and can be performed in a different sequence. Additionally, at least a part of the steps in the flow diagrams of the above-mentioned embodiments can include multiple steps or stages. These steps or stages are not necessarily completed at the same time but can be executed at different times. The execution order of these steps or stages is also not necessarily sequential but can be interchanged or alternated with other steps or at least a part of other steps or stages.

Based on the same inventive concept, the embodiments of this application also provide a resource exchange apparatus for implementing the resource exchange method mentioned above. The solution for solving the problem provided by this apparatus is similar to the solution described in the above-mentioned method. Therefore, the specific features of one or more embodiments of the resource exchange apparatus provided below can be referred to in the features of the resource exchange method mentioned above and will not be reiterated here.

In an exemplary embodiment, as shown in Figure 4, a resource exchange apparatus is provided, which includes: a receiving module 402, a first exchange module 404, a condition determination module 406, and a second exchange module 408.

The receiving module 402 is configured to receive an instant resource exchange request sent by an exchange requester.

The first exchange module 404 is configured to perform, based on a first expected value limit of a current exchange response attribute corresponding to the instant resource exchange request, resource exchange between the exchange requester and a first exchange responder corresponding to the first expected value limit.

The condition determination module 406 is configured to perform a condition determination step of generating, upon detecting that a remaining required resource amount of the instant resource exchange request exceeds a preset resource amount threshold, a first resource request condition based on the remaining required resource amount and the first expected value limit.

The second exchange module 408 is configured to perform resource exchange between the exchange requester and a second exchange responder corresponding to a second resource request condition upon detecting that the second resource request condition matches the first resource request condition.

In an exemplary embodiment, the resource exchange apparatus further includes an optimization module. After the first resource request condition is generated based on the remaining required resource amount and the first expected value limit, the optimization module is configured to:
obtain a second expected value limit of the current exchange response attribute corresponding to the instant resource exchange request if no second resource request condition matching the first resource request condition is detected within a preset time range; and
update the first resource request condition based on a preset optimization coefficient and the second expected value limit.

In an exemplary embodiment, the resource exchange apparatus further includes an updating module. After the first resource request condition is generated based on the remaining required resource amount and the first expected value limit, the updating module is configured to:
detect a third expected value limit of the current exchange request attribute corresponding to the instant resource exchange request; and
update the first resource request condition based on the third expected value limit in the case where the third expected value limit is different from the first expected value limit.

In an exemplary embodiment, the resource exchange apparatus further includes a loop module. After the resource exchange is performed between the exchange requester and the second exchange responder based on the second resource request condition, the loop module is configured to:
update the remaining required resource amount of the instant resource exchange request based on exchange amount information of the resource exchange between the exchange requester and the second exchange responder, and controls the condition determination module to proceed to the condition determination step, until the updated remaining required resource is less than or equal to the preset resource amount threshold.

In an exemplary embodiment, the resource exchange apparatus further includes a classification processing module. Before the condition determination module 406 generates, upon determining that the remaining required resource amount of the instant resource exchange request exceeds the preset resource amount threshold, the first resource request condition based on the remaining required resource amount and the first expected value limit, the classification processing module is configured to:
obtain an exchange type of the instant resource exchange request;
control the condition determination module 406 to proceed to the condition determination step if it is determined that the exchange type of the instant resource exchange request is the dynamic adjustment type; or
detect whether the remaining required resource amount of the instant resource exchange request exceeds the preset resource amount threshold when it is determined that the exchange type of the instant exchange request is the instant execution type;
re-determine a new first expected value limit of the current exchange response attribute corresponding to the instant resource exchange request upon detecting that the remaining required resource amount of the instant resource exchange request exceeds the preset resource amount threshold;
perform the resource exchange between the exchange requester and a new first exchange responder corresponding to the new first expected value limit based on the new first expected value limit of the current exchange response attribute, and return to the step of detecting whether the remaining required resource amount of the instant resource exchange request exceeds the preset resource amount threshold until the remaining required resource is less than or equal to the preset resource amount threshold.

In an exemplary embodiment, the resource exchange apparatus includes a display module. After the resource exchange between the exchange requester and the second exchange responder corresponding to the second resource request condition is performed, the display module is configured to:
detect an actual resource consumption and an estimated resource consumption when the exchange type of the instant resource exchange request is the instant execution type; and
display both the actual resource consumption and the estimated resource consumption. For example, the actual resource consumption and the estimated resource consumption are displayed via a display screen of the terminal device.

The various modules in the above-mentioned resource exchange apparatus can be implemented entirely or partially through software, hardware, or a combination of both. These modules may be embedded in as hardware or exist independently within a processor of a computer device. Alternatively, these modules can be stored as software in the memory of a computer device, so as to be invoked by the processor to perform the operations corresponding to each module.

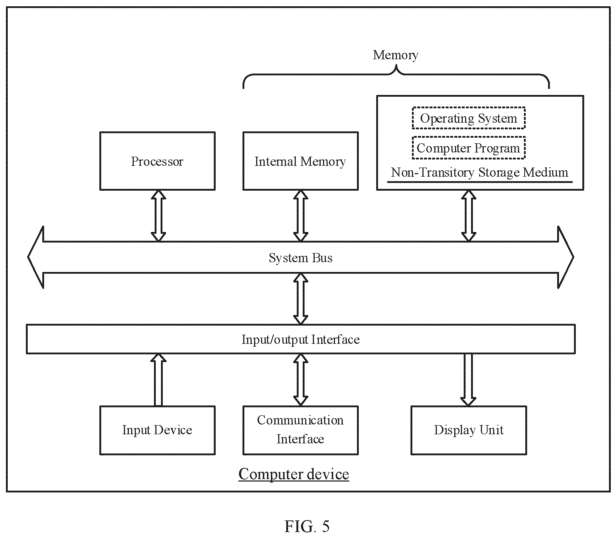

In an exemplary embodiment, a computer device is provided, which may be a terminal, and its internal structure is shown in Figure 5. The computer device includes a processor, a memory, an input/output (I/O) interface, a communication interface, a display unit, and an input device. The processor, the memory, and the I/O interface are connected via a system bus, while the communication interface, the display unit, and the input device are connected to the system bus through the I/O interface. The processor of the computer device provides computational and control capabilities. The memory of the computer device consists of a non-transitory storage medium and an internal memory. The non-transitory storage medium stores the operating system and computer programs. The internal memory provides an environment for the running of the operating system and computer programs stored in the non-transitory storage medium. The I/O interface of the computer device is configured for the exchange of information between the processor and external devices. The communication interface of the computer device is configured to be in wired or wireless communication with external terminals. The wireless communication can be achieved through WiFi, mobile cellular networks, Near Field Communication (NFC), or other technologies. When executed by the processor, the computer program implements a resource exchange method. The display unit of the computer device is configured to form visually perceivable images and can be a display screen, projection device, or virtual reality device. The display screen may be an LCD or e-ink display. The input device of the computer device can be a touch layer overlaid on the display screen, buttons, a trackball, or a touchpad located on the computer device's casing, or external peripherals like a keyboard, touchpad, or mouse.

Those skilled in the art can understand that the structure shown in Figure 5 is merely a block diagram of parts of the structure related to the present application and does not limit the computer device to which the solution of the present application applies. The specific computer device may include more or fewer components than shown in the figure, or some components may be combined, or the components may be arranged differently.

In an embodiment, a computer device is provided, including a memory and a processor. The memory stores a computer program and the processor implements the steps of the methods in the above-mentioned embodiments when executing the computer program.

In an embodiment, a computer-readable storage medium is provided, in which a computer program is stored. When the computer program is executed by a processor, the steps of the methods in the above-mentioned embodiments are implemented.

In an embodiment, a computer program product is provided, including a computer program. When the computer program is executed by a processor, the steps of the methods in the above-mentioned embodiments are implemented.

It should be noted that the user information (including but not limited to user device information, user personal information, etc.) and data (including but not limited to data used for analysis, stored data, displayed data, etc.) involved in this application are authorized by the user or all parties, and the collection, use and processing of relevant data comply with related regulations.

Those of ordinary skilled in the art can understand that all or part of the processes of the methods in the above-mentioned embodiments can be implemented by instructing related hardware through the computer program. The computer program can be stored in a non-transitory computer-readable storage medium. When the computer program is executed, the processes of the methods in the above-mentioned embodiments can be performed. Any reference to memory, database or other medium used in the embodiments in this application may include at least one of non-transitory memory and transitory memory. Non-transitory memory may include read-only memory (ROM), magnetic tape, floppy disk, flash memory, optical memory, high-density embedded non-transitory memory, resistive random access memory (ReRAM), magnetoresistive random access memory (MRAM), ferroelectric random access memory (FRAM), phase change memory (PCM), graphene memory, etc. Transitory memory may include random access memory (RAM), external cache memory, etc. By way of example and without limitation, RAM can be in various forms, such as static random access memory (SRAM) or dynamic random access memory (DRAM). The database involved in each embodiment provided in this application may be a relational database or a non-relational database. The non-relational database may include a distributed database based on blockchain, etc., but is not limited thereto. The processor involved in the embodiments in this application may be a general-purpose processor, a central processing unit, a graphics processor, a digital signal processor, a programmable logic device, a data processing logic device based on quantum computing, an artificial intelligence (AI) processor, etc., but is not limited thereto.

## Claims

1. A method for resource exchange, comprising:
receiving an instant resource exchange request sent by an exchange requester (S10);
in responding to the instant resource exchange request, performing, based on a first expected value limit of a current exchange response attribute corresponding to the instant resource exchange request, a resource exchange between the exchange requester and a first exchange responder corresponding to the first expected value limit (S20);
a condition determination step (S30) of generating, upon detecting that a remaining required resource amount of the instant resource exchange request exceeds a preset resource amount threshold, a first resource request condition based on the remaining required resource amount and the first expected value limit; and
upon detecting a second resource request condition that matches the first resource request condition, performing a resource exchange between the exchange requester and a second exchange responder corresponding to the second resource request condition based on the second resource request condition (S40).

2. The method according to claim 1, wherein after generating the first resource request condition based on the remaining required resource amount and the first expected value limit, the method further comprises:
obtaining a second expected value limit of the current exchange response attribute corresponding to the instant resource exchange request if no second resource request condition that matches the first resource request condition is detected within a preset time range (S411); and
updating the first resource request condition based on a preset optimization coefficient and the second expected value limit (S412).

3. The method according to claim 1, wherein after generating the first resource request condition based on the remaining required resource amount and the first expected value limit, the method further comprises:
detecting a third expected value limit of the current exchange request attribute corresponding to the instant resource exchange request (S421); and
in a case where the third expected value limit is different from the first expected value limit, updating the first resource request condition based on the third expected value limit (S422).

4. The method according to claim 1, wherein after performing the resource exchange between the exchange requester and the second exchange responder corresponding to the second resource request condition based on the second resource request condition, the method further comprises:
re-determining the remaining required resource amount of the instant resource exchange request based on an exchange amount information of the resource exchange between the exchange requester and the second exchange responder, and proceeding to the condition determination step.

5. The method according to any one of claims 1 to 4, wherein before generating, upon detecting that the remaining required resource amount of the instant resource exchange request exceeds the preset resource amount threshold, the first resource request condition based on the remaining required resource amount and the first expected value limit, the method further comprises:
obtaining an exchange type of the instant resource exchange request;
proceeding to the condition determination step if it is determined that the exchange type of the instant resource exchange request is a dynamic adjustment type;
if it is determined that the exchange type of the instant exchange request is an instant execution type, detecting whether the remaining required resource amount of the instant resource exchange request exceeds the preset resource amount threshold;
re-determining a new first expected value limit of the current exchange response attribute corresponding to the instant resource exchange request when detecting that the remaining required resource amount of the instant resource exchange request exceeds the preset resource amount threshold; and
based on the new first expected value limit of the current exchange response attribute corresponding to the instant resource exchange request, performing a resource exchange between the exchange requester and a new first exchange responder corresponding to the new first expected value limit, and returning to the step of detecting whether the remaining required resource amount of the instant resource exchange request exceeds the preset resource amount threshold until the remaining required resource is less than or equal to the preset resource amount threshold.

6. The method according to claim 5, wherein after performing the resource exchange between the exchange requester and the second exchange responder corresponding to the second resource request condition according to the second resource request condition, the method further comprises:
determining an actual resource consumption and an estimated resource consumption in cases where the exchange type of the instant resource exchange request is the instant execution type; and
displaying the actual resource consumption and the estimated resource consumption.

7. A computer device configured to carry out the method of any of claims 1 to 6.

8. A computer-readable storage medium comprising a computer program stored therein, wherein the computer program, when executed by a processor, causes the processor to perform steps of the method according to any of claims 1 to 6.

9. A computer program product comprising a computer program, wherein the computer program, when executed by a processor, causes the processor to perform steps of the method according to any of claims 1 to 6.
